# EUROPÄISCHE PATENTSCHRIFT

(11) **EP 4 143 653 B1**
(45) Veröffentlichungstag und Bekanntmachung des Hinweises auf die Patenterteilung: **14.02.2024**
(21) Anmeldenummer: 21723151.3
(22) Anmeldetag: 27.04.2021
(51) Int. Cl.: G05D 1/02

(54) **NAVIGIEREN EINES ROBOTERS**
NAVIGATING A ROBOT
NAVIGATION D'UN ROBOT

(30) Priorität: 30.04.2020 DE 102020205544
(43) Veröffentlichungstag der Anmeldung: 08.03.2023
(73) Patentinhaber: VOLKSWAGEN AKTIENGESELLSCHAFT, 38440 Wolfsburg (DE)
(72) Erfinder: BAIER, Fabian, 30989 Gehrden (DE)
(86) Internationale Anmeldenummer: PCT/EP2021/060997
(87) Internationale Veröffentlichungsnummer: WO 2021/219645

(56) Entgegenhaltungen:
- WO-A1-2016/014917
- US-A1- 2017 225 891
- US-A1- 2018 215 545

## Beschreibung

Die Erfindung betrifft ein Verfahren zum Navigieren eines mittels einer Antriebseinheit bewegten Roboters, bei dem ein erstes einem ersten Bereich zugeordnetes Navigationssystem einen ersten Fahrweg im ersten Bereich unter Nutzung von ersten Umgebungsdaten des ersten Bereichs ermittelt und entsprechende erste Steuerdaten zum Bewegen des Roboters entlang des ersten Fahrwegs für die Antriebseinheit des Roboters bereitstellt. Die Erfindung betrifft weiterhin ein Rechnerprogrammprodukt umfassend ein Programm für eine Rechnereinheit einer Steuereinrichtung eines Roboters. Die Erfindung betrifft darüber hinaus einen Roboter mit einer Antriebseinheit zum Bewegen des Roboters und einem ersten einem ersten Bereich zugeordneten Navigationssystem zum Ermitteln eines ersten Fahrwegs im ersten Bereich unter Nutzung von ersten Umgebungsdaten des ersten Bereichs und zum Bereitstellen von entsprechenden ersten Steuerdaten zum Bewegen des Roboters entlang des ersten Fahrwegs für die Antriebseinheit des Roboters. Schließlich betrifft die Erfindung auch eine Fertigungsstätte mit einem ersten Bereich, einem gegenüber dem ersten Bereich bewegten zweiten Bereich und einem Roboter, der vom jeweiligen Bereich zum jeweils anderen Bereich bewegbar ist.

In Bezug auf eine Fertigungsstätte können mobile Roboter, fahrerlose Transportsysteme und/oder dergleichen regelmäßig in die Lage kommen, insbesondere bei einer taktgebundenen Fließfertigung, wie sie beispielsweise in der Automobilindustrie vorliegt, bewegte Bänder befahren beziehungsweise überqueren zu müssen. Nicht nur aber besonders hierbei erweist sich die Anwendung von Navigationssystemen als erforderlich. Es ist bekannt, dass im Bereich der mobilen Navigation von Robotern mittels Navigationssystemen Komponenten beziehungsweise Programmkomponenten eines Robot Operating Systems (ROS) genutzt werden. Hierbei handelt es sich um ein Open-Source Projekt, welches unter anderem dazu dient, eine mobile, autonome Servicerobotik im Bereich von Forschung und/oder Entwicklung mit einheitlichen Softwarekomponenten beziehungsweise Rechnerprogrammkomponenten zu unterstützen. In der Industrie finden derartige Komponenten insbesondere Anwendung beim Steuern von fahrerlosen Transportfahrzeugen. Es können ergänzend eigene Implementierungen der Industrie vorgesehen sein. Eine Komponente, die für eine zweidimensionale Navigation genutzt wird, wird auch als ROS-Navigation-Stack bezeichnet. Die Komponenten zur Navigation sind zum Beispiel von GUIMARÃES, Rodrigo Longhi, et al. in ROS navigation: Concepts and tutorial, Robot Operating System (ROS), Springer, Cham, 2016, Seiten 121 bis 160 beschrieben, welches auch unter der Internet-Adresse https://link.springer.com/chapter/10.1007/978-3-319-26054-9_6 eingesehen werden kann. Das Navigationssystem gliedert sich danach unter anderem in Kartenbereitstellung, globale Wegplanung, lokale Wegplanung, insbesondere Hindernisvermeidung und Lokalisierung. Eine Option, welche unter ROS vorhanden ist, aber nicht in den ROS-Navigation-Stack integriert ist, ist durch Komponenten eines Mobile-Robotic-Programming-Toolkit (mrpt) gebildet. Hierzu offenbart zum Beispiel RODRIGUEZ, Enrique, et al. A ros reactive navigation system for ground vehicles based on tp-space transformations in XXXVII Jornadas de Automatica, 2016, welches auch unter der Internet-Adresse http://ingmec.ual.es/~jlblanco/papers/ja2016reactive.pdf eingesehen werden kann. Beide Ortungs- beziehungsweise Navigationsverfahren, welche in den Komponenten enthalten sind, nutzen Partikelfiltermethoden. Die Komponenten basieren unter anderem ferner darauf, ausschließlich ein einziges Koordinatensystem beziehungsweise Bezugssystem zu nutzen, welches dem Ermitteln der Navigation zugrundegelegt wird.

Um ein sich bewegendes Band beziehungsweise eine Schubskid-Einheit bei einer Roboterpositionierungs- beziehungsweise Roboternavigationsanwendung zu berücksichtigen, wurde bereits versucht, eine Karte, auf deren Basis ein Fahrweg ermittelt wird beziehungsweise navigiert wird, anzupassen, und einen bewegten Teil sowie einen statischen Teil der Navigation beziehungsweise des Fahrwegs in einem gemeinsamen Bezugssystem zusammenzufassen. Eine Problematik besteht hierbei darin, dass verfügbare Positionierungsalgorithmen, wie zum Beispiel Advance-Monte-Carlo-Localization, eine nahezu statische Karte annehmen, um eine Positionierung und/oder Routenplanung beziehungsweise Navigation durchzuführen. Als Abgrenzung hierzu kann zum Beispiel Self Localization and Mapping (SLAM) gesehen werden. Das ist ein Verfahren, welches auch Staubsaugerroboter nutzen. Bei Verwendung einer dynamisch angepassten Karte kann es bei der Positionierung zu Problemen in Form von Instabilitäten kommen, und zwar unabhängig davon, in welchem der Teile sich der Roboter sich befindet. Dies ergibt sich deshalb, weil verfügbare verwendete Algorithmen statische Karten zum Navigieren als Bedingung erfordern. Diese Karten liegen vorzugsweise digital zum Beispiel als Pixelgrafiken im Dateiformat PGM (Pixel Grid Map) oder dergleichen vor.

Aus US 2018/215545 A1 ist ein automatisiertes Erfüllungssystem mit automatischer Ausnahmebehandlung bekannt, wobei ein Computersystem Anweisungen an ein autonomes Robotergerät übertragen, um in der Einrichtung entsorgte physische Objekte zu bergen. Das Robotergerät kann zum Standort der physischen Objekte navigieren und eine erste Menge physischer Objekte aufnehmen. Ferner kann das Robotergerät zum physischen Objekte einen Satz von Attributen bestimmen, die mit den aufgenommenen Objekten verknüpft sind.

Die WO 2016/014917 A1 zeigt eine Methode und ein System zur Stückkommissionierung oder - einlagerung innerhalb einer Logistikanlage. Das System umfasst einen zentralen Server und mindestens einen mobilen Manipulationsroboter. Der zentrale Server ist so konfiguriert, dass er mit den Robotern kommuniziert, um Daten zur Stückkommissionierung zu senden und zu empfangen. Dazu gehören eine eindeutige Identifikation für jedes zu kommissionierende Stück, ein Standort der zu kommissionierenden Teile innerhalb der Logistikanlage und eine Route für den Roboter innerhalb der Logistikanlage übernehmen. Die Roboter können dann durch Erkennung von Landmarken durch mindestens einen von mehreren Sensoren autonom innerhalb der Logistikanlage navigieren und sich positionieren.

US 2017/225891 offenbart ein System zum optimalen Positionieren eines Roboter für die Entnahme oder Platzierung von Gegenständen. Die optimale Position wird durch affine Transformationsberechnung oder Feature-Mapping bestimmt. Der Roboter richtet sich zunächst entsprechend der erwarteten Artikelposition aus, die durch eine oder mehrere Markierungen angezeigt wird. Die Ausrichtung wird anhand der Größe und Ausrichtung der Markierungen in Bildern bestimmt, die mit der Kamera des Roboters aufgenommen wurden.

Der Erfindung liegt die Aufgabe zugrunde, das Navigieren des mittels der Antriebseinheit bewegten Roboters insbesondere innerhalb einer Fertigungsstätte zu verbessern, bei der der Roboter mobil in Bereichen verfahren wird, die sich selbst zueinander bewegen.

Als Lösung werden mit der Erfindung ein Verfahren, ein Rechnerprogrammprodukt, ein Roboter sowie eine Fertigungsstätte gemäß den unabhängigen Ansprüchen vorgeschlagen.

Vorteilhafte Weiterbildungen ergeben sich durch Merkmale der abhängigen Ansprüche.

In Bezug auf ein gattungsgemäßes Verfahren wird mit der Erfindung insbesondere vorgeschlagen, dass ein zweites Navigationssystem, welches einem gegenüber dem ersten Bereich bewegten zweiten Bereich zugeordnet ist, einen zweiten Fahrweg im zweiten Bereich unter Nutzung von zweiten Umgebungsdaten des zweiten Bereichs ermittelt und entsprechende zweite Steuerdaten für die Antriebseinheit des Roboters zum Bewegen entlang des zweiten Fahrwegs bereitstellt.

In Bezug auf ein Rechnerprogrammprodukt wird mit der Erfindung insbesondere vorgeschlagen, dass das Rechnerprogrammprodukt ein Programm für eine Rechnereinheit einer Steuereinrichtung eines Roboters umfasst, wobei das Programm Programmkodeabschnitte eines Programms zum Ausführen der Schritte eines Verfahrens gemäß der Erfindung aufweist, wenn das Programm durch die Rechnereinheit ausgeführt wird

In Bezug auf einen gattungsgemäßen Roboter wird mit der Erfindung insbesondere vorgeschlagen, dass dieser ein zweites einem gegenüber dem ersten Bereich bewegten zweiten Bereich zugeordnetes Navigationssystem zum Ermitteln eines zweiten Fahrwegs im zweiten Bereich unter Nutzung von zweiten Umgebungsdaten des zweiten Bereichs und zum Bereitstellen von entsprechenden zweiten Steuerdaten für die Antriebseinheit des Roboters zum Bewegen entlang des zweiten Fahrwegs aufweist.

Bezüglich einer gattungsgemäßen Fertigungsstätte wird insbesondere vorgeschlagen, dass der Roboter gemäß der Erfindung ausgebildet ist.

Die Erfindung basiert unter anderem auf dem Gedanken, dass der Roboter mittels zweiter Navigationssysteme positioniert und/oder navigiert beziehungsweise geführt werden kann, die vorzugsweise zwei voneinander unterschiedliche Bezugssysteme beziehungsweise Koordinatensysteme nutzen. Die Navigationssysteme können zumindest teilweise beispielsweise den ROS-Navigation-Stack oder dergleichen nutzen. Der Fahrweg wird vorzugsweise in wenigstens in den ersten und den zweiten Fahrweg aufgeteilt, wobei der erste Fahrweg im ersten Bereich und der zweite Fahrweg im zweiten Bereich ist. Jedes der Koordinatensysteme ist dabei vorzugsweise an den jeweiligen Bereich gekoppelt, sodass die beiden Koordinatensysteme beziehungsweise Bezugssysteme entsprechend der Bewegung der Bereiche zueinander ebenfalls zueinander bewegt sind. Ein Beispiel ist dabei ein Verfahren des Roboters von einem ortsfesten Bereich einer Fertigungsstätte auf ein Transportband beziehungsweise eine Schubskid-Einheit, wie es bei einer taktgebundenen Fließfertigung Einsatz findet. Bei einer Überquerung einer Grenze zwischen einem ortsfesten Anstellbereich und der fahrenden Schubskid-Einheit erfolgt vorzugsweise ein Wechsel des Bezugssystems beziehungsweise des Koordinatensystems, indem ein Wechsel der Nutzung der Navigationssysteme erfolgt. Die mittels eines Laserscanners des Roboters wahrgenommene Umgebung, welche zuvor im zugehörigen Bezugssystem beziehungsweise Koordinatensystem statisch erschien, ist nun relativ zum Roboter bewegt, ohne dass die Antriebseinheit eine entsprechende Bewegung ausführt. Die Erfindung sieht daher vor, den Arbeitsbereich des Roboters, der insbesondere den ersten und den zweiten Bereich umfasst, in zwei unterschiedliche Teilbereiche aufzuteilen, nämlich den ersten Bereich und den zweiten Bereich. Der erste Bereich kann vorzugsweise ortsfest sein, wohingegen der zweite Bereich vorzugsweise gegenüber dem ersten Bereich bewegt ist. Dies entspricht einer Aufteilung einer Navigationskarte in zwei entsprechende Teile. Bei dem vorgenannten Beispiel kann eine Teilkarte dem beweglichen Band beziehungsweise der Schubskid-Einheit zugeordnet sein. Eine andere Teilkarte hingegen ist dem Rest der Umgebung zugeordnet, die ortsfest ist. Beide Teilkarten nutzen vorzugsweise jeweils ein individuelles Koordinatensystem beziehungsweise Bezugssystem, welches dem Navigieren beziehungsweise Positionieren zugrundeliegt, und beispielsweise einen überlappenden Kartenbereich umfassen kann, der wenigstens einer Abmessung des Roboters entspricht. Die Bezugssysteme beziehungsweise Koordinatensysteme und/oder die Teilkarten können durch Daten eines Bandantriebes des Bandes beziehungsweise der Schubskid-Einheit vorzugsweise jederzeit, räumlich korrekt zueinander ausgerichtet werden, sodass sich zu einem jeweiligen Zeitpunkt eine jeweils aktuelle Repräsentation der Umgebung, die zumindest die Bereiche umfasst, ergibt. Bei der Erfindung brauchen die jeweiligen Navigationssysteme daher nur die jeweiligen aktuellen Umgebungsdaten beziehungsweise Teilkarten für ihre Navigation zu nutzen und den jeweils aus ihrer Sicht bewegten Teil nicht zu verwenden. Dadurch kann eine Baumstruktur aus Koordinatensystemen beziehungsweise Bezugssystemen erreicht werden, sodass eine jeweilige komplexe Navigationsaufgabe in entsprechende Teile unterteilt werden kann. Dadurch kann eine stabile und zuverlässige Steuerung des Roboters beim Bewegen mittels der Antriebseinheit erreicht werden. Die Erfindung kann natürlich auch mehr als zwei zueinander bewegte Bereiche umfassen und entsprechend adaptiert werden.

Bewegen im Sinne der vorliegenden Anmeldung meint, dass der Roboter seine örtliche Position, vorzugsweise innerhalb eines jeweiligen der Bereiche, verändert, indem er beispielsweise entlang des Fahrwegs, der den ersten und den zweiten Fahrweg umfassen kann, verfahren wird beziehungsweise bewegt wird. Der Roboter kann daher auch ein Transportfahrzeug sein. Der Roboter kann aber auch ein Arbeitsgerät sein, welches vorgebbare Tätigkeiten in der Fertigungsstätte übernehmen kann.

Der Fahrweg kann eine Trajektorie umfassen, die durch ein jeweiliges der Navigationssysteme ermittelt wird und entlang dem der Roboter verfahren wirdl. Zu diesem Zweck stellt das jeweilige Navigationssystem entsprechende Steuerdaten für die Antriebseinheit des Roboters bereit, sodass dieser sich entlang des Fahrwegs bewegt. Dem Grunde nach kann der Fahrweg jedoch auch lediglich durch eine einzige oder durch mehrere Positionen gebildet sein. Durch das Verfahren beziehungsweise Bewegen des Roboters ändert sich seine Position zumindest in dem jeweiligen Bereich, in dem der Roboter angeordnet ist.

Das Navigationssystem umfasst daher vorzugsweise auch ein Rechnerprogramm, welches auf einer Steuereinrichtung des Roboters ausgeführt werden kann. Die Steuereinrichtung beziehungsweise die Rechnereinheit kann zumindest teilweise auch von der Antriebseinheit umfasst sein. Zumindest teilweise kann das Navigationssystem jedoch auch eine oder mehrere Hardwareschaltungen umfassen. Das Navigationssystem ist vorzugsweise zumindest teilweise eine Anwendung nach Art eines Rechnerprogramms.

Die Steuereinrichtung umfasst die programmgesteuerte Rechnereinheit, die mittels des Rechnerprogramms derart gesteuert werden kann, dass sie die gewünschte Funktionalität gemäß der Erfindung bereitzustellen vermag. Die Steuereinrichtung kann zumindest teilweise von der Antriebseinheit umfasst sein. Sie kann aber auch zumindest teilweise als separate Einheit des Roboters ausgebildet sein.

Es wird ferner vorgeschlagen, dass das erste und das zweite Navigationssystem über eine gleiche Schnittstelle mit der Antriebseinheit kommunizieren. Dadurch kann erreicht werden, dass zwischen den Navigationssystemen zum Steuern der Antriebseinheit auf einfache Weise gewechselt werden kann. Dadurch kann das Wechseln zwischen den Navigationssystemen nicht nur schnell sondern auch zuverlässig erreicht werden.

Die Schnittstelle kann zum Beispiel durch vorgebbare Steuerdaten gebildet sein, die für die Antriebseinheit, insbesondere die Steuereinrichtung, bereitgestellt und/oder an diese übermittelt werden. Insbesondere handelt es sich hierbei um eine Softwareschnittstelle, die es ermöglicht, Daten zwischen Anwendungen, die an die jeweilige Schnittstelle angeschlossen sind, auszutauschen.

Gemäß einer Weiterbildung wird vorgeschlagen, dass das erste und das zweite Navigationssystem unabhängig voneinander betrieben werden und die Antriebseinheit entweder nur mit dem ersten oder nur mit dem zweiten Navigationssystem kommuniziert. Dadurch kann erreicht werden, dass die Antriebseinheit vorzugsweise immer nur durch das Navigationssystem gesteuert wird, welches dem jeweiligen Bereich zugeordnet ist, in welchem sich der Roboter befindet. Es brauchen daher nicht beide Navigationssysteme zugleich aktiv sein. Dies erlaubt es, Rechnerkapazität beim Navigieren einzusparen. Darüber hinaus können die Navigationssysteme gekapselt werden, sodass sie im Wesentlichen unabhängig voneinander betrieben werden können. Je nach Bedarf kann also das benötigte Navigationssystem zum Teil auch deaktiviert werden.

Vorzugsweise nutzen das erste und das zweite Navigationssystem zum Ermitteln der jeweiligen Fahrwege zumindest teilweise gemeinsame Daten. Die Daten können in einem gemeinsamen Speicher, auf den das erste und das zweite Navigationssystem zugreifen, gespeichert sein. Dieser Speicher kann ein übergeordneter Speicher einer Zentrale oder dergleichen sein. Dadurch besteht die Möglichkeit, dass, insbesondere wenn ein Wechsel der Navigationssysteme aufgrund eines Wechsels der Bereiche erforderlich erscheint, das jeweils nicht aktivierte Navigationssystem schnell zu aktivieren, sodass ein Wechsel zuverlässig und schnell durchgeführt werden kann. Zu diesem Zweck kann vorgesehen sein, dass Bezugspunkte der Bezugssysteme beziehungsweise Koordinatensysteme miteinander verglichen werden und zumindest die gemeinsam genutzten Daten entsprechend für das zu aktivierende Navigationssystem angepasst werden.

Es wird ferner vorgeschlagen, dass der erste und der zweite Bereich wenigstens einen gemeinsamen Überlappungsbereich ausbilden und die Kommunikation zwischen der Antriebseinheit und den Navigationssystemen beim Durchfahren des Überlappungsbereichs durch den Roboter von einem jeweiligen Bereich in den jeweils anderen Bereich von einem jeweiligen Navigationssystem auf das jeweils andere der Navigationssystem wechselt. Das ermöglicht es auf einfache Weise, einen zuverlässigen Wechsel der Navigationssysteme beim Übergang vom ersten Bereich in den zweiten Bereich zu ermöglichen. Insbesondere die beim Stand der Technik auftretenden Instabilitäten können dadurch weiter vermieden werden. Es wird also erreicht, dass der Roboter zuverlässig von einem Bereich in den jeweiligen anderen Bereich wechseln kann. Der Überlappungsbereich ist ein Bereich, der vorzugsweise Abmessungen aufweist, die zumindest den Abmessungen des Roboters in Bereichsebene entsprechen. Dadurch kann der Roboter mittels eines der Navigationssysteme aus dem jeweils zugeordneten Bereich in den Überlappungsbereich bewegt werden, wobei im

Überlappungsbereich sodann ein Wechsel der Navigationssysteme erfolgt und der Roboter in der Folge mittels des anderen Navigationssystems in den zugeordneten anderen Bereich bewegt wird. Der Überlappungsbereich ermöglicht also eine zuverlässige und mobile Übergabe der Steuerung des Roboters bei einem Übergang von einem der Bereiche in den jeweiligen anderen Bereich.

Es wird ferner vorgeschlagen, dass die jeweiligen Umgebungsdaten vor einer Nutzung durch die jeweiligen Navigationssysteme separat ermittelt werden. Die Umgebungsdaten, aus denen die entsprechenden Karten beziehungsweise Teilkarten ermittelt werden können, können vor einer Inbetriebnahme des Roboters beziehungsweise der Navigationssysteme separat ermittelt worden sein. Dem Grunde nach besteht natürlich auch die Möglichkeit, eine entsprechende Umfelderfassungssensorik des Roboters, im Folgenden kurz Umfeldsensorik genannt, dazu zu nutzen, die entsprechenden Umgebungsdaten zumindest teilweise zu ermitteln, bevor eine Nutzung des Roboters im bestimmungsgemäßen Betrieb erfolgt. Zu diesem Zweck kann zum Beispiel auch ein lernfähiges neuronales Netz genutzt werden, wobei der Roboter während eines Trainingsmodus entsprechend verfahren wird. Natürlich können auch weitere Möglichkeiten des Erfassens der Umgebungsdaten in Betracht kommen beziehungsweise in Kombination genutzt werden.

Es wird ferner vorgeschlagen, dass die ersten und die zweiten Umgebungsdaten auf jeweilige erste und zweite Bezugssysteme bezogen sind und insbesondere bei einem Bewegen des Roboters von einem jeweiligen Bereich in den jeweils anderen Bereich ein Bezugspunkt des jeweils anderen Bereichs erfasst wird. Die Umgebungsdaten sind demgemäß an die jeweiligen Bereiche, zu denen sie gehören, angepasst beziehungsweise mit diesen verbunden. Vorzugsweise werden die Umgebungsdaten des ersten Bereichs auf das dem ersten Bereich zugeordneten Bezugssystem beziehungsweise Koordinatensystem bezogen. Dadurch kann das erste Navigationssystem die ersten Umgebungsdaten sehr einfach handhaben. Entsprechendes gilt für das zweite Bezugssystem. Das hat den großen Vorteil, dass bei den zueinander bewegten Bezugssystemen die jeweiligen Umgebungsdaten zumindest teilweise im Wesentlichen ortsfest sein können, und zwar in Bezug auf das jeweilige Bezugssystem beziehungsweise Koordinatensystem. Dies reduziert den Rechenaufwand bei der Navigation erheblich.

Bei einem Bewegen des Roboters von einem jeweiligen Bereich in den jeweils anderen Bereich wird ein Bezugspunkt des jeweils anderen Bereichs erfasst. Dies kann unter Nutzung der roboterseitigen Umfeldsensorik erfolgen. Dies hat den Vorteil, dass die Übergabe von einem der Navigationssysteme auf das jeweilige andere der Navigationssysteme erleichtert werden kann. Dadurch, dass der Bezugspunkt des jeweiligen anderen Koordinatensystems erfasst wird, kann ein Abgleich beim Übergang des Roboters von dem einen Bereich in den anderen Bereich auf einfache Weise verbessert werden. Das jeweilige aktive Teilszenario beziehungsweise Navigationssystem kann die aktuell ermittelte Position des Roboters dem inaktiven Teilszenario beziehungsweise Navigationssystem mitteilen. Dies ermöglicht eine gute Initialisierung beim Wechsel zwischen dem aktiven Navigationssystem und dem inaktiven Navigationssystem und kann dadurch eine stabile Lokalisierung beim Übergang ermitteln. Das Umschalten der Szenarien erfolgt vorzugsweise automatisch, sobald der Roboter sich in dem Überlappungsbereich bewegt hat und dabei eine Geschwindigkeit in Richtung des anderen Bereich aufweist.

Durch die Kapselung der Navigationssysteme ist es möglich, nach außen, insbesondere in Bezug auf die Antriebseinheit, die Schnittstellen zu nutzen beziehungsweise zu bedienen und damit ein Wechseln flüssig und stabil zu realisieren. Somit besteht auf einfache Weise die Möglichkeit im Bezugssystem des Transportbandes beziehungsweise der Schubskid-Einheit und einem ortsfesten Bezugssystem zu navigieren.

Die für das erfindungsgemäße Verfahren angegebenen Vorteile und Wirkungen gelten gleichermaßen für das Rechnerprogrammprodukt der Erfindung, den Roboter der Erfindung und die Fertigungsstätte gemäß der Erfindung und umgekehrt. Insbesondere können daher Verfahrensmerkmale auch vorrichtungstechnisch und umgekehrt formuliert sein.

Zu der Erfindung gehören auch Weiterbildungen des erfindungsgemäßen Roboters, die Merkmale aufweisen, wie sie bereits im Zusammenhang mit den Weiterbildungen des erfindungsgemäßen Verfahrens beschrieben worden sind. Aus diesem Grund sind die entsprechenden Weiterbildungen des erfindungsgemäßen Roboters hier nicht noch einmal beschrieben.

Die Erfindung umfasst auch die Kombinationen der Merkmale der beschriebenen Ausführungsformen.

Im Folgenden ist ein Ausführungsbeispiel der Erfindung beschrieben. Hierzu zeigt:
- Fig. 1: eine schematische Darstellung eines Produktionsumfelds einer Fahrzeugmontage als Fertigungsstätte;
- Fig. 2: eine schematische Darstellung eines Montageszenarios;
- Fig. 3: eine schematische Darstellung einer Navigation in einem ortsfesten Bereich;
- Fig. 4: eine schematische Darstellung einer Navigation in einem bewegten Bereich;
- Fig. 5: eine schematische Darstellung einer Navigation in einem Übergangsbereich;
- Fig. 6: eine schematische Darstellung der Navigation aus Sicht von Koordinatensystemen;
- Fig. 7: eine schematische Kartendarstellung eines Ausschnitts des Produktionsumfelds gemäß Fig. 1; und
- Fig. 8: eine schematische Kartendarstellung des Ausschnitts gemäß Fig. 7, der in einen stationären und einen beweglichen Teil aufgeteilt ist.

Bei den im Folgenden erläuterten Ausführungsbeispielen handelt es sich um bevorzugte Ausführungsformen der Erfindung. Bei den Ausführungsbeispielen stellen die beschriebenen Komponenten der Ausführungsform jeweils einzelne, unabhängig voneinander zu betrachtende Merkmale der Erfindung dar, welche die Erfindung jeweils auch unabhängig voneinander weiterbilden und damit auch einzeln oder in einer anderen als der gezeigten Kombination als Bestandteil der Erfindung anzusehen sind. Des Weiteren sind die beschriebene Ausführungsformen auch durch weitere der bereits beschriebenen Merkmale der Erfindung ergänzbar.

In den Figuren sind funktionsgleiche Elemente jeweils mit denselben Bezugszeichen versehen.

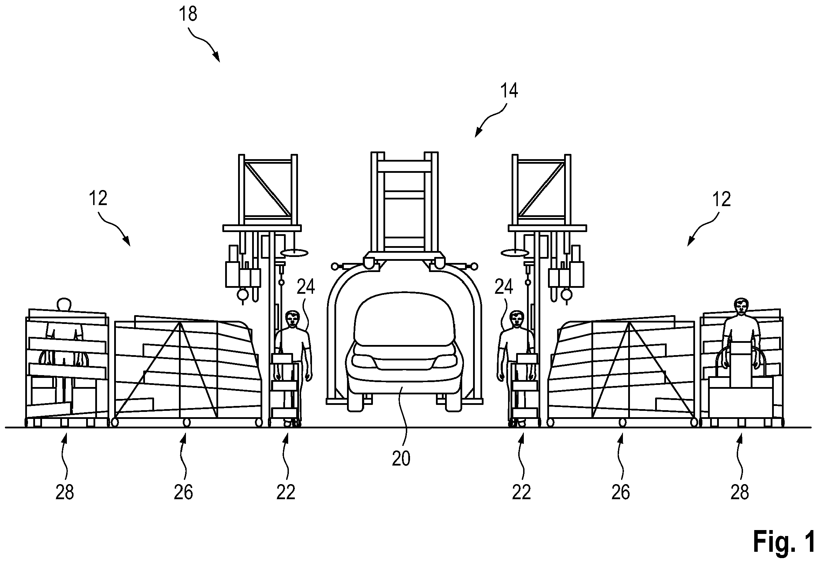

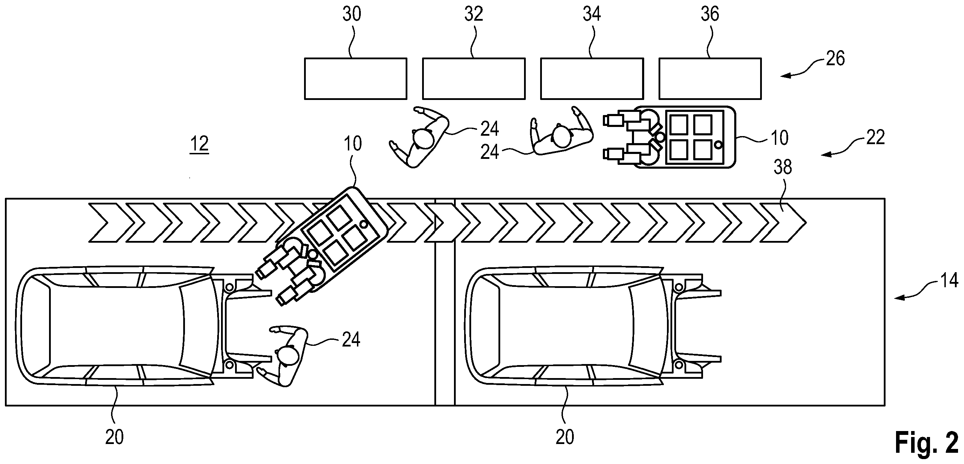

Fig. 1 zeigt in einer schematischen Darstellung ein Produktionsumfeld 18 einer Fahrzeugmontage als Fertigungsstätte. Zu erkennen ist, dass das Produktionsumfeld 18 ein Transportband 14 als zweiten Bereich aufweist, an dem Fahrzeuge 20 befestigt sind, die durch einen ortsfesten ersten Bereich 12 des Produktionsumfelds 18 mittels des Transportbands 14 gefahren werden. Der erste Bereich 12 umfasst unter anderem unmittelbar neben einer Längserstreckung des Transportbands 14 einen Werkerbereich 22, in dem Montagepersonal 24 und mehrere Roboter 10 (Fig. 2) positioniert sind, um entsprechende Montagetätigkeiten an den mittels des Transportbands 14 transportierten Fahrzeugen 20 vorzunehmen. Das Transportband 14 hat eine Quererstreckung von vorliegend etwa 2,4 Metern. Je nach Bedarf kann diese Abmessung auch variieren. Der Handwerkerbereich 22 hat vorliegend eine Breite quer zur Längserstreckung des Transportbands 14 von etwa einem Meter. Je nach Bedarf kann auch diese Abmessung variieren. Gegenüberliegend zum Transportband 14 grenzt an den Werkerbereich 20 jeweils ein Bereitstellstreifen 26 an, in dem Material, welches für die Montage benötigt wird, bereitgestellt wird. An den Bereitstellstreifen 26 schließen sich dann nach außen Fahrstraßen 28 an, die dazu dienen, Material an den Bereitstellstreifen 26 zur Verfügung zu stellen, beziehungsweise abzufahren.

Fig. 2 zeigt eine schematische Darstellung eines Montageszenarios basierend auf dem Produktionsumfeld 18 gemäß Fig. 1. Zu erkennen ist, dass sich im Werkerbereich 22 zwei Monteure 24 sowie ein Roboter 10 aufhalten. Das Demonstrationsszenario bezieht sich auf einen Einbau eines Getriebelagers und eines Hydroaggregats in ein jeweiliges der mittels des Transportbandes 14 transportierten Fahrzeuge 20. Entsprechend sind im Bereitstellstreifen 26 Getriebelager 30, Kleinteile 32 hierfür, Hydroaggregate 34 sowie Kleinteile 36 hierfür bereitgestellt, die zur Montage an den Kraftfahrzeugen 20 vorgesehen sind.

Das Transportband 14 weist einzelne Transportabschnitte auf, die in einer Bewegungsrichtung gemäß den Pfeilen 38 aufeinander in Längsrichtung folgen. Jeder Abschnitt weißt ein Fahrzeug 20 auf, welches zu montieren ist. Im linken Bereich des dargestellten Transportbands ist ein Abschnitt mit einem Fahrzeug 20 gezeigt, bei dem ein Roboter 10 und ein Monteur 24 gemeinsam an einer Frontpartie des Fahrzeugs 20 Tätigkeiten vornehmen. Zu diesem Zweck ist es erforderlich, dass der Roboter 10 zwischen dem Werkerbereich 22 und dem Transportband 14 wechseln kann, und zwar ebenso wie die Monteure 24. Damit ein zuverlässiger Betrieb der Roboter 10 sowohl im Bereitstellbereich 22 als auch auf dem Transportband 14 möglich ist, wird eine Antriebseinheit (nicht dargestellt) des Roboters 10 wie im Folgenden erläutert, gesteuert.

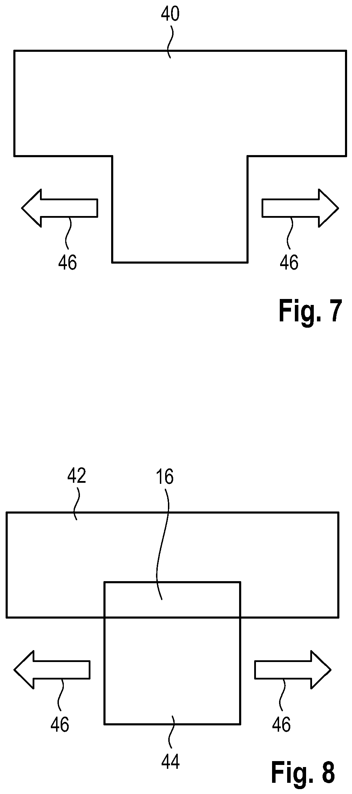

Fig. 7 zeigt eine schematische Kartendarstellung eines Ausschnitts des Produktionsumfelds basierend auf den Fig. 1, 2. Es ist hier eine Navigationskarte 40 dargestellt. Mit Pfeilen 46 ist ein Bereich der Navigationskarte 40 dargestellt, der dem Transportband 14 zugeordnet ist und daher beweglich ist.

Fig. 8 zeigt in einer schematischen Darstellung wie Fig. 7, wie die Karte 40 unter Nutzung der Erfindung aufgeteilt wird, und zwar in eine Karte 42, die einen stationären Teil beziehungsweise ortsfesten Teil des Produktionsumfelds 18 repräsentiert, hier insbesondere der Werkerbereich 22, der Bereitstellstreifen 26 sowie die Fahrstraße 29. Darüber hinaus ist eine Karte 44 des beweglichen Teils, der dem Transportband 14 zugeordnet ist, dargestellt. Die beiden Karten 42, 44 stellen einen Überlappungsbereich 16 bereit. Der Überlappungsbereich 16 ist vorliegend größer ausgebildet als entsprechende Abmessungen des Roboters 10.

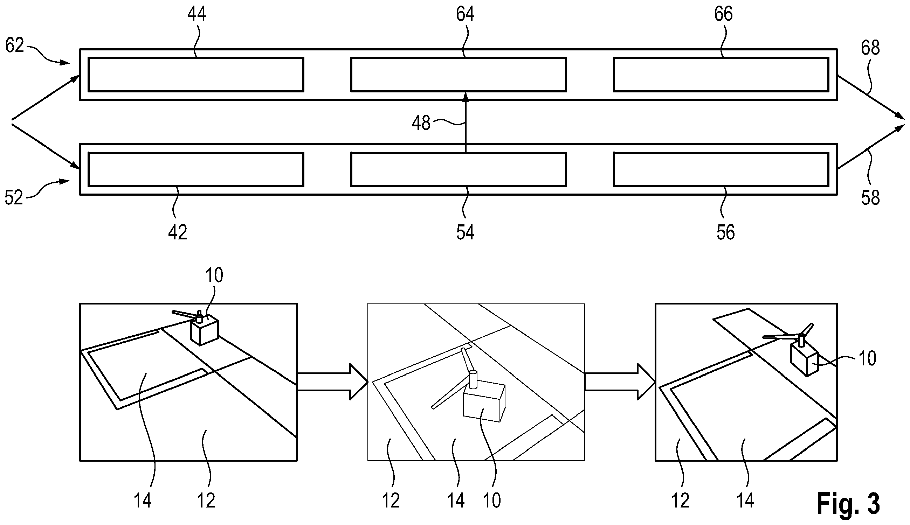

Fig. 3 zeigt in einer schematischen Darstellung eine Navigation vom ortsfesten Bereich 12, basierend auf der Karte 42 gemäß Fig. 2, auf den bewegten Bereich 14. Zu erkennen ist, dass eine Position 48 des Roboters 10 vorliegend im Werkerbereich 22, das heißt, im Bereich der Karte 42 (Fig. 8) positioniert ist. Ein erstes Navigationssystem 52 einer Steuereinrichtung des Roboters 10, die dem ersten Bereich 12 zugeordnet ist, nutzt vorliegend also die stationäre Karte 42, die unter anderem den Logistikbereich - wie oben beschrieben - umfasst. Das erste Navigationssystem 52 nutzt daher also die Karte 42 vom ortsfesten Bereich und umfasst ferner eine Lokalisierungseinheit 54 und einen Routenplaner 56.

Eine Position des Roboters 10 wird hinsichtlich der Lokalisierung als stationär mit der Lokalisierungseinheit 54 erfasst. Entsprechend erfolgt auch die Navigation beziehungsweise Routenplanung stationär mit dem entsprechenden Routenplaner 56. Das erste Navigationssystem 52 liefert somit einen ersten Fahrweg 58, mit der die Antriebseinheit des Roboters 10 entsprechend gesteuert wird.

In den unteren dargestellten Feldern ist ersichtlich, wie eine Umfeldsensorik des Roboters 10 das Umfeld jeweils wahrnimmt. Zu erkennen ist, dass die linke und die rechte Darstellung jeweils die ortsfesten Umfelddaten des ersten Bereichs 12 darstellen, wenn der Roboter 10 sind im ersten Bereich 12 befindet. Dagegen zeigt die mittlere Darstellung die beweglichen Umgebungsdaten, wenn sich der Roboter 10 im zweiten Bereich 14 befindet. Im linken und im rechten Feld nutzt der Roboter 10 beziehungsweise dessen Steuereinrichtung das erste Navigationssystem 52, weil der Roboter 10 sich im Werkerbereich 22 aufhält. Im mittleren Feld befindet sich der Roboter 10 auf dem Transportband 14, weshalb in diesem Fall die Steuereinrichtung des Roboters 10 ein zweites Navigationssystem 62 nutzt, um einen Fahrweg 68 zu ermitteln. In diesem Fall nutzt der Roboter 10 daher die Steuerdaten gemäß einem zweiten Fahrweg 68, um entsprechend verfahren zu werden. Das zweite Navigationssystem 62 nutzt hierfür die zweite Karte 44 (Fig. 8), um mittels einer Lokalisierungseinheit 64 die Position 48 des Roboters 10 zu ermitteln. In diesem Fall wurde festgestellt, dass die Position 48 des Roboters 10 auf dem Transportband 14 ist, weshalb das zweite Navigationssystem 62 mittels einer Routenplanungseinheit 66 den entsprechenden zweiten Fahrweg 68 beziehungsweise Steuerdaten hierzu ermittelt, die an die Antriebseinheit des Roboters 10 übermittelt werden.

Dadurch kann sowohl auf dem Transportband 14 als auch im stationären Bereich 12, insbesondere dem Werkerbereich 22, ein zuverlässiges Steuern des Roboters 10 gewährleistet werden. In Fig. 3 wechselt der Roboter 10 an der Position 48 vom Werkerbereich 22 auf das Transportband 14.

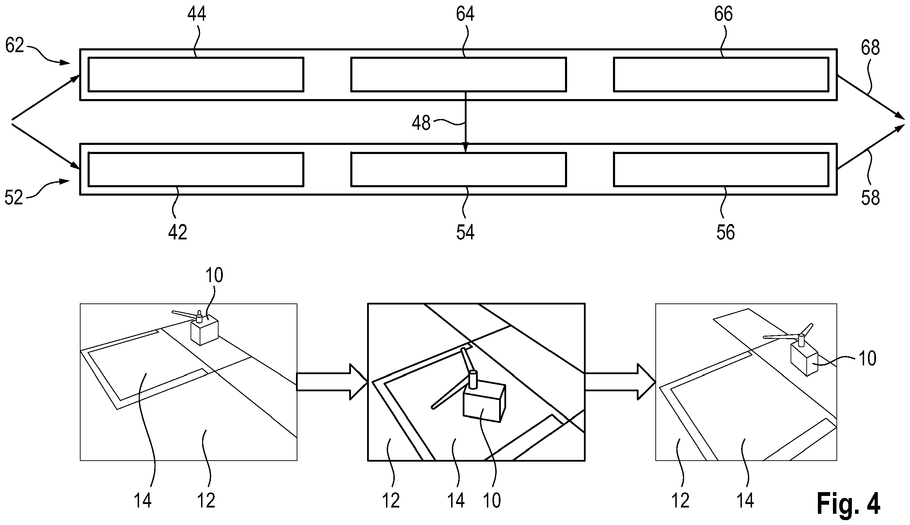

Fig. 4 zeigt nun in einer Darstellung wie Fig. 3 eine Bewegung des Roboters 10 vom Transportband 14 in den Werkerbereich 22. Der Roboter 10 befindet sich bei der linken Darstellung auf dem Transportband 14 und nimmt deshalb die Umgebungsdaten des ersten Bereichs 12 als bewegt wahr, obwohl er auf dem Transportband 14 nicht bewegt sein zu braucht. Gesteuert wird der Roboter 10 in diesem Betriebszustand zunächst durch das zweite Navigationssystem 62 unter Nutzung der Karte 44. Mittels der Lokalisierungseinheit 44 wird die Roboterposition 48 ermittelt, und es erfolgt eine Routenplanung gemäß dem Routenplaner 66, der den zweiten Fahrweg 68 ermittelt und entsprechende Steuerdaten an die Steuereinrichtung des Roboters 10 übermittelt. Im mittleren Feld wechselt der Roboter 10 vom Transportband 14 in den stationären Bereich 12, hier den Werkerbereich 22. Mit dem Wechseln wechselt auch die Nutzung des Navigationssystems durch die Steuereinrichtung des Roboters 10. Der Roboter 10 wird nunmehr durch das Navigationssystem 52 gesteuert, welches eine Lokalisierung mittels der Lokalisierungseinheit 54 basierend auf der Karte 42 durchführt und eine entsprechende Routenplanung gemäß dem Routenplaner 56 durchführt. Es wird der erste Fahrweg 58 ermittelt, und entsprechende Steuerdaten werden an die Antriebseinheit des Roboters übermittelt.

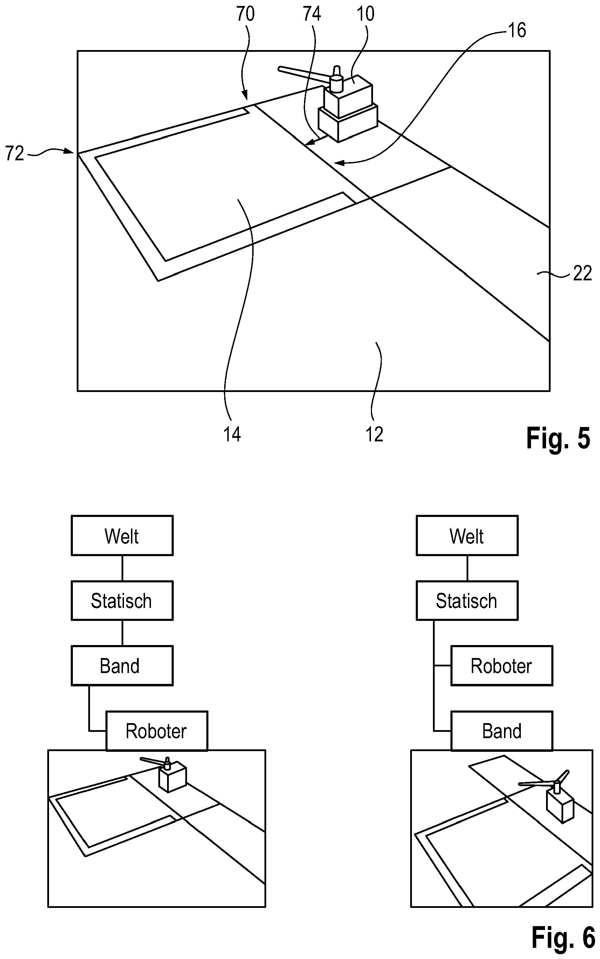

Fig. 5 verdeutlicht in einer schematischen Darstellung die Navigation im ortsfesten Bereich beziehungsweise im Werkerbereich 22 und auf das bewegte Transportband 14. Mit 70 ist ein statisches Koordinatensystem des ersten Bereichs 12 bezeichnet, welches auch den Werkerbereich 22 umfasst. Mit 72 ist ein Bandkoordinatensystem bezeichnet, welches dem Transportband 14 zugeordnet ist. 74 bezeichnet einen Geschwindigkeitsvektor in Richtung der Bandkante des Roboters 10. 16 bezeichnet den Überlappungsbereich 16 der beiden Karten 42, 44.

Fig. 6 zeigt eine schematische Darstellung der Navigation aus Sicht der jeweiligen Koordinatensysteme 70, 72. Zu erkennen ist die Verschiebung des Koordinatensystems des Roboters 10 bei einem Bezugssystemwechsel beziehungsweise bei einem Wechsel zwischen dem ersten und dem zweiten Bereich 12, 14. Im linken Bereich der Fig. 6 ist das Bezugssystem des Roboters 10 unterhalb vom Bezugssystem 72 des Transportbands 14. Im rechten Bereich ist das Bezugssystem des Roboters 10 unterhalb des statischen Bezugssystems 70 des Bereichs 12 und parallel zum Bezugssystem des Transportbands 14.

Insgesamt zeigen die Ausführungsbeispiele, wie durch die Erfindung das Betreiben des Roboters 10 in zueinander bewegten Bereichen verbessert und stabilisiert werden kann.

Die Ausführungsbeispiele dienen ausschließlich der Erläuterung der Erfindung und sind für diese nicht beschränkend.

### Bezugszeichenliste

- 10: Roboter
- 12: erster Bereich
- 14: zweiter Bereich
- 16: Überlappungsbereich
- 18: Produktionsumfeld
- 20: Fahrzeug
- 22: Werkerbereich
- 24: Montagepersonal
- 26: Bereitstellstreifen
- 28: Fahrstraße
- 30: Getriebelager
- 32: Kleinteile
- 34: Hydroaggregate
- 36: Kleinteile
- 38: Bewegungsrichtung
- 40: Navigationskarte
- 42: Karte
- 44: Karte
- 46: Pfeil
- 48: Position
- 52: Navigationssystem
- 54: Lokalisierungseinheit
- 56: Routenplaner
- 58: Fahrweg
- 62: Navigationssystem
- 64: Lokalisierungseinheit
- 66: Routenplanungseinheit
- 68: Fahrweg
- 70: Koordinatensystem
- 72: Bandkoordinatensystem
- 74: Geschwindigkeitsvektor

## Patentansprüche

1. Verfahren zum Navigieren eines mittels einer Antriebseinheit bewegten Roboters (10), bei dem ein erstes einem ersten Bereich (12) zugeordnetes Navigationssystem einen ersten Fahrweg (58) im ersten Bereich unter Nutzung von ersten Umgebungsdaten des ersten Bereichs (12) ermittelt und entsprechende erste Steuerdaten zum Bewegen des Roboters (10) entlang des ersten Fahrwegs (58) für die Antriebseinheit des Roboters (10) bereitstellt,
**dadurch gekennzeichnet, dass**
ein zweites Navigationssystem, welches einem gegenüber dem ersten Bereich (12) bewegten zweiten Bereich (14) zugeordnet ist, einen zweiten Fahrweg (68) im zweiten Bereich unter Nutzung von zweiten Umgebungsdaten des zweiten Bereichs (14) ermittelt und entsprechende zweite Steuerdaten für die Antriebseinheit des Roboters (10) zum Bewegen entlang des zweiten Fahrwegs (68) bereitstellt.

2. Verfahren nach Anspruch 1, **dadurch gekennzeichnet, dass** das erste und das zweite Navigationssystem über eine gleiche Schnittstelle mit der Antriebseinheit kommunizieren.

3. Verfahren nach einem der vorhergehenden Ansprüche, **dadurch gekennzeichnet, dass** das erste und das zweite Navigationssystem unabhängig voneinander betrieben werden und die Antriebseinheit entweder nur mit dem ersten oder nur mit dem zweiten Navigationssystem kommuniziert.

4. Verfahren nach einem der vorhergehenden Ansprüche, **dadurch gekennzeichnet, dass** das erste und das zweite Navigationssystem zum Ermitteln der jeweiligen Fahrwege zumindest teilweise gemeinsame Daten nutzen.

5. Verfahren nach einem der vorhergehenden Ansprüche, **dadurch gekennzeichnet, dass** der erste und der zweite Bereich (12, 14) wenigstens einen gemeinsamen Überlappungsbereich (16) ausbilden und die Kommunikation zwischen der Antriebseinheit und den Navigationssystemen beim Durchfahren des Überlappungsbereichs (16) von einem jeweiligen Bereich (12, 14) in den jeweils anderen Bereich (12, 14) durch den Roboter (10) von einem jeweiligen Navigationssystem auf das jeweils andere der Navigationssystem wechselt.

6. Verfahren nach einem der vorhergehenden Ansprüche, **dadurch gekennzeichnet, dass** die jeweiligen Umgebungsdaten vor einer Nutzung durch die jeweiligen Navigationssysteme separat ermittelt werden.

7. Verfahren nach einem der vorhergehenden Ansprüche, **dadurch gekennzeichnet, dass** die ersten und die zweiten Umgebungsdaten auf jeweilige erste und zweite Bezugssysteme bezogen sind und insbesondere bei einem Bewegen des Roboters (10) von einem jeweiligen Bereich (12, 14) in den jeweils anderen Bereich (12, 14) ein Bezugspunkt des jeweils anderen Bereichs (12, 14) erfasst wird.

8. Rechnerprogrammprodukt umfassend ein Programm für eine Rechnereinheit einer Steuereinrichtung eines Roboters (10), wobei das Programm Programmkodeabschnitte eines Programms zum Ausführen der Schritte eines Verfahrens nach einem der vorhergehenden Ansprüche aufweist, wenn das Programm durch die Rechnereinheit ausgeführt wird.

9. Roboter (10) mit einer Antriebseinheit zum Bewegen des Roboters (10) und einem ersten einem ersten Bereich (12) zugeordneten Navigationssystem zum Ermitteln eines ersten Fahrwegs im ersten Bereich (12) unter Nutzung von ersten Umgebungsdaten des ersten Bereichs (12) und zum Bereitstellen von entsprechenden ersten Steuerdaten zum Bewegen des Roboters (10) entlang des ersten Fahrwegs für die Antriebseinheit, **gekennzeichnet durch**
ein zweites einem gegenüber dem ersten Bereich (12) bewegten zweiten Bereich (14) zugeordnetes Navigationssystem zum Ermitteln eines zweiten Fahrwegs im zweiten Bereich (14) unter Nutzung von zweiten Umgebungsdaten des zweiten Bereichs (14) und zum Bereitstellen von entsprechenden zweiten Steuerdaten für die Antriebseinheit des Roboters (10) zum Bewegen entlang des zweiten Fahrwegs.

10. Fertigungsstätte (18) mit einem ersten Bereich (12), einem gegenüber dem ersten Bereich (12) bewegten zweiten Bereich (14) und einem Roboter (10), der von einem jeweiligen Bereich (12, 14) zum jeweils anderen Bereich (12, 14) bewegbar ist, **dadurch gekennzeichnet, dass**
der Roboter (10) gemäß Anspruch 9 ausgebildet ist.

## Claims

1. Method for navigating a robot (10) moved by means of a drive unit, in which method a first navigation system assigned to a first region (12) determines a first travel path (58) in the first region using first surroundings data of the first region (12) and provides corresponding first control data for moving the robot (10) along the first travel path (58) for the drive unit of the robot (10),
**characterized in that**
a second navigation system assigned to a second region (14), which is moved relative to the first region (12), determines a second travel path (68) in the second region using second surroundings data of the second region (14) and provides corresponding second control data for the drive unit of the robot (10) for movement along the second travel path (68).

2. Method according to Claim 1, **characterized in that** the first and second navigation systems communicate with the drive unit via an identical interface.

3. Method according to either of the preceding claims, **characterized in that** the first and second navigation systems are operated independently of one another and the drive unit communicates either only with the first navigation system or only with the second navigation system.

4. Method according to any of the preceding claims, **characterized in that** the first and second navigation systems use at least partly shared data for determining the respective travel paths.

5. Method according to any of the preceding claims, **characterized in that** the first and second regions (12, 14) form at least one common overlap region (16) and the communication between the drive unit and the navigation systems changes from one respective navigation system to the respective other of the navigation systems upon the robot (10) travelling through the overlap region (16) from one respective region (12, 14) into the respective other region (12, 14).

6. Method according to any of the preceding claims, **characterized in that** the respective surroundings data are determined separately prior to use by the respective navigation systems.

7. Method according to any of the preceding claims, **characterized in that** the first and second surroundings data are related to respective first and second reference systems, and in particular upon movement of the robot (10) from one respective region (12, 14) into the respective other region (12, 14), a reference point of the respective other region (12, 14) is detected.

8. Computer program product comprising a program for a computer unit of a control device of a robot (10), wherein the program has program code sections of a program for carrying out the steps of a method according to any of the preceding claims when the program is executed by the computer unit.

9. Robot (10) comprising a drive unit for moving the robot (10) and a first navigation system assigned to a first region (12) and serving for determining a first travel path in the first region (12) using first surroundings data of the first region (12) and for providing corresponding first control data for movement of the robot (10) along the first travel path for the drive unit,
**characterized by**
a second navigation system assigned to a second region (14), which is moved relative to the first region (12), and serving for determining a second travel path in the second region (14) using second surroundings data of the second region (14) and for providing corresponding second control data for the drive unit of the robot (10) for movement along the second travel path.

10. Manufacturing facility (18) comprising a first region (12), a second region (14), which is moved relative to the first region (12), and a robot (10) movable from one respective region (12, 14) to the respective other region (12, 14),
**characterized in that**
the robot (10) is configured according to Claim 9.

## Revendications

1. Procédé de navigation d'un robot (10) déplacé au moyen d'une unité d'entraînement, dans lequel un premier système de navigation associé à une première zone (12) détermine un premier trajet de déplacement (58) dans la première zone en exploitant des premières données d'environnement de la première zone (12) et fournit à l'unité d'entraînement du robot (10) des premières données de commande correspondantes pour déplacer le robot (10) le long du premier trajet de déplacement (58),
**caractérisé en ce qu'**un deuxième système de navigation, qui est associé à une deuxième zone (14) mobile par rapport à la première zone (12), détermine un deuxième trajet de déplacement (68) dans la deuxième zone en exploitant des deuxièmes données d'environnement de la deuxième zone (14) et fournit à l'unité d'entraînement du robot (10) des deuxièmes données de commande correspondantes pour un déplacement le long du deuxième trajet de déplacement (68).

2. Procédé selon la revendication 1, **caractérisé en ce que** le premier et le deuxième système de navigation communiquent avec l'unité d'entraînement par une même interface.

3. Procédé selon l'une quelconque des revendications précédentes, **caractérisé en ce que** le premier et le deuxième système de navigation fonctionnent indépendamment l'un de l'autre, et l'unité d'entraînement communique soit uniquement avec le premier, soit uniquement avec le deuxième système de navigation.

4. Procédé selon l'une quelconque des revendications précédentes, **caractérisé en ce que** le premier et le deuxième système de navigation exploitent des données au moins partiellement communes pour déterminer les trajets de déplacement respectifs.

5. Procédé selon l'une quelconque des revendications précédentes, **caractérisé en ce que** la première et la deuxième zone (12, 14) réalisent au moins une zone de chevauchement commune (16), et lorsque le robot (10) traverse la zone de chevauchement (16) d'une zone respective (12, 14) à l'autre zone (12, 14) respectivement, la communication entre l'unité d'entraînement et les systèmes de navigation passe d'un système de navigation respectif à l'autre système de navigation respectivement.

6. Procédé selon l'une quelconque des revendications précédentes, **caractérisé en ce que** les données d'environnement respectives sont déterminées séparément avant une exploitation par les systèmes de navigation respectifs.

7. Procédé selon l'une quelconque des revendications précédentes, **caractérisé en ce que** les premières et les deuxièmes données d'environnement se réfèrent à des premier et deuxième systèmes de référence, et un point de référence de l'autre zone (12, 14) respectivement est détecté en particulier lorsque le robot (10) se déplace d'une zone respective (12, 14) à l'autre zone (12, 14) respectivement.

8. Produit de programme informatique, comprenant un programme pour une unité de calcul d'un dispositif de commande d'un robot (10), dans lequel le programme présente des sections de code programme d'un programme pour effectuer les étapes d'un procédé selon l'une quelconque des revendications précédentes lorsque le programme est effectué par l'unité de calcul.

9. Robot (10), comprenant une unité d'entraînement pour déplacer le robot (10) et un premier système de navigation associé à une première zone (12) pour déterminer un premier trajet de déplacement dans la première zone (12) en exploitant des premières données d'environnement de la première zone (12) et pour fournir à l'unité d'entraînement des premières données de commande correspondantes pour déplacer le robot (10) le long du premier trajet de déplacement,
**caractérisé par** un deuxième système de navigation associé à une deuxième zone (14) mobile par rapport à la première zone (12) pour déterminer un deuxième trajet de déplacement dans la deuxième zone (14) en exploitant des deuxièmes données d'environnement de la deuxième zone (14) et pour fournir à l'unité d'entraînement du robot (10) des deuxièmes données de commande correspondantes pour un déplacement le long du deuxième trajet de déplacement.

10. Site de production (18) comprenant une première zone (12), une deuxième zone (14) mobile par rapport à la première zone (12) et un robot (10) qui peut être déplacé d'une zone respective (12, 14) à l'autre zone (12, 14) respectivement,
**caractérisé en ce que** le robot (10) est réalisé selon la revendication 9.
